# EUROPÄISCHE PATENTSCHRIFT

(11) **EP 4 433 994 B1**
(45) Veröffentlichungstag und Bekanntmachung des Hinweises auf die Patenterteilung: **16.09.2026**
(21) Anmeldenummer: 22812430.1
(22) Anmeldetag: 17.11.2022
(51) Int. Cl.: G06V 10/80, G06T 7/70, G06V 20/56, B62D 15/02

(54) **VERFAHREN UND VORRICHTUNG ZUM ERZEUGEN EINER SURROUND-ANSICHT, UND KRAFTFAHRZEUG**
METHOD AND DEVICE FOR GENERATING A SURROUND VIEW, AND MOTOR VEHICLE
PROCÉDÉ ET DISPOSITIF DE GÉNÉRATION D'UNE VUE PANORAMIQUE, ET VÉHICULE AUTOMOBILE

(30) Priorität: 18.11.2021 DE 102021212970
(43) Veröffentlichungstag der Anmeldung: 25.09.2024
(73) Patentinhaber: AUMOVIO Autonomous Mobility Germany GmbH, 85057 Ingolstadt (DE); AUMOVIO Engineering Solutions GmbH, 60489 Frankfurt am Main (DE)
(72) Erfinder: MACHADO, Gustavo, 88131 Lindau (DE); PANAKOS, Andreas, 70839 Gerlingen-Schillerhöhe (DE); EICH, Markus, 88131 Lindau (DE); FRIEBE, Markus, 88131 Lindau (DE); HUTFLESS, Lukas, 60489 Frankfurt (DE); TERTEL, Philipp, 60489 Frankfurt (DE)
(74) Vertreter: Aumovio Corporation
(86) Internationale Anmeldenummer: PCT/DE2022/200270
(87) Internationale Veröffentlichungsnummer: WO 2023/088524

(56) Entgegenhaltungen:
- DE-A1- 102007 056 962
- DE-B3- 102020 213 146
- US-A1- 2009 102 921

## Beschreibung

Die Erfindung betrifft ein Verfahren und eine Vorrichtung zum Erzeugen einer Surround-Ansicht, sowie ein entsprechendes Kraftfahrzeug.

Fahrerassistenzsysteme können den Fahrer beim Manövrieren des Kraftfahrzeugs unterstützen. Hierzu können Kamerasysteme eingesetzt werden, welche eine Ansicht der Fahrzeugumgebung generieren und für den Fahrer ausgeben. Der Fahrer kann sich dann beispielsweise beim Ausparken oder Einparken des Kraftfahrzeugs anhand der Ansicht orientieren, um das Kraftfahrzeug schneller und sicherer zu manövrieren.

Hierzu sind Surroundview-Kamerasysteme bekannt, welche durch Fusionierung von Bildern mehrerer Fahrzeugkameras die gesamte Umgebung des Kraftfahrzeugs abbilden können. Die von den Kameras erzeugten realen Bilder können dabei zu einem Umgebungsbild fusioniert werden.

Die grafische Darstellung das Fahrzeugumfelds kann in verschiedenen Perspektiven erfolgen. Beispielsweise ist eine "Bowl"-Ansicht bekannt, bei welcher die Texturen aus den Kameras derart projiziert werden, dass eine virtuelle dreidimensionale "Bowl" (Schüssel) erzeugt wird, welche die gesamte Fläche um das Kraftfahrzeug herum darstellt. Eine weitere bekannte Ansicht ist die "Top-View"-Darstellung (Vogelperspektive bzw. Draufsicht).

Einige Bereiche der Fahrzeugumgebung können von den Fahrzeugkameras nicht erfasst werden, da sie etwa von Bauteilen des Kraftfahrzeugs verdeckt werden oder außerhalb des Sichtfelds der Fahrzeugkameras liegen, wie dies etwa für den Bereich unterhalb des Kraftfahrzeugs der Fall ist.

Aus der DE 10 2020 213 146 B3 ist ein Kamerasystem zur Umfelderfassung für ein Fahrzeug bekannt, wobei der Fahrzeugkörper in einem Kamerabild erfasst wird, Grenzpunkte aus einer Fahrzeugkörpergrenze des Fahrzeugkörpers festgelegt werden und Kamerakoordinaten in ein Fahrzeug-Koordinatensystem konvertiert werden, um die Begrenzung einer kamerafreien Textur zu ermitteln.

Druckschrift DE 10 2007 056 962 A1 offenbart eine Fahrunterstützungsvorrichtung mit einer in einem Fahrzeug angeordneten Anzeige sowie einer Fahrinformationsempfangseinheit, die einen Lenkwinkel eines Lenkrads des Fahrzeugs empfängt. Auf der Anzeige werden eine Fahrzeugfigur oder -darstellung, welche die Form des Fahrzeugs angibt, sowie eine Reifenfigur oder -darstellung, welche die Form eines Reifens des Fahrzeugs darstellt, angezeigt. Beide Darstellungen erfolgen dabei aus der Vogelperspektive. Weiterhin wird auf der Anzeige auch ein Umgebungsobjekt dargestellt, welches aus einem Kamerabild einer Fahrzeugkamera ermittelt wird. Wenn ein Hindernis um das Fahrzeug herum angezeigt wird, erfolgt die Darstellung der Reifenfigur gemäß dem tatsächlichen Lenkwinkel des Fahrzeugs.

Teile der Umgebungsinformationen können fehlen, insbesondere bezüglich derjenigen räumlichen Regionen, die näher an den Fahrzeuggrenzen liegen, um keine Fahrzeugteile sichtbar zu machen, welche im Allgemeinen in ungewöhnlicher Weise auf dem Boden projiziert werden.

Selbst wenn ein konservativer Ansatz verwendet wird, bei dem der Bodenblindbereich als ein Rechteck mit einer Größe festgelegt wird, die alle Fahrzeugumgebungen abdeckt, gibt es immer noch Bodenbereiche, die ordnungsgemäß von Kameras erfasst werden und in der Ausgabe durch dieses Rechteck abgedeckt werden. Mit anderen Worten gibt es Bodenblindbereiche, typischerweise die Bodenregionen in der Nähe von Fahrzeuggrenzen, welche durch einen rechteckigen Blindbereich verdeckt werden und in der Ausgabe von Visualisierungen, z.B. in der Draufsicht oder Bowlansicht, nicht sichtbar sind. Dies beeinträchtigt die Sichtbarkeit von Objekten in der Umgebung während des Manövrierens des Fahrzeugs, da diese durch den rechteckigen Blindbereich verdeckt werden könnten.

Es ist daher eine Aufgabe der vorliegenden Erfindung, den Blindbereich zu verkleinern.

Diese Aufgabe wird durch ein Verfahren und eine Vorrichtung zum Erzeugen einer Surround-Ansicht einer Umgebung eines Kraftfahrzeugs und ein Kraftfahrzeug mit den Merkmalen der unabhängigen Patentansprüche gelöst.

Weitere bevorzugte Ausführungsformen sind Gegenstand der Unteransprüche.

Gemäß einem ersten Aspekt schafft die vorliegende Erfindung demnach ein Verfahren zum Erzeugen einer Surround-Ansicht einer Umgebung eines Kraftfahrzeugs, wobei das Kraftfahrzeug einen Fahrzeugkörper und relativ zu dem Fahrzeugkörper bewegliche Bauteile aufweist, insbesondere auslenkbare Bauteile. Das Verfahren umfasst das Erzeugen einer ersten Maske, welche eine auf einen Untergrund projizierte Silhouette des Fahrzeugkörpers darstellt, und das Erzeugen einer zweiten Maske, welche eine auf den Untergrund projizierte Silhouette der beweglichen Bauteile des Kraftfahrzeugs in einem momentanen Zustand darstellt. Weiter umfasst das Verfahren das Erzeugen einer Maske des Kraftfahrzeugs durch Vereinigung der ersten Maske mit der zweiten Maske und das Erzeugen der Surround-Ansicht der Umgebung des Kraftfahrzeugs anhand von Kamerabildern von Fahrzeugkameras des Kraftfahrzeugs unter Verwendung der Maske des Kraftfahrzeugs.

Gemäß einem zweiten Aspekt schafft die vorliegende Erfindung eine Vorrichtung zum Erzeugen einer Surround-Ansicht einer Umgebung eines Kraftfahrzeugs, wobei das Kraftfahrzeug einen Fahrzeugkörper und relativ zu dem Fahrzeugkörper bewegliche Bauteile aufweist. Die Vorrichtung umfasst eine Schnittstelle, welche dazu ausgebildet ist, Kamerabilder von Fahrzeugkameras des Kraftfahrzeugs zu empfangen, und eine Recheneinrichtung, welche dazu ausgebildet ist, eine erste Maske zu erzeugen, welche eine auf einen Untergrund projizierte Silhouette des Fahrzeugkörpers darstellt, und eine zweite Maske zu erzeugen, welche eine auf den Untergrund projizierte Silhouette der beweglichen Bauteile des Kraftfahrzeugs in einem momentanen Zustand darstellt. Die Recheneinrichtung ist weiter dazu ausgebildet, eine Maske des Kraftfahrzeugs durch Vereinigung der ersten Maske mit der zweiten Maske zu erzeugen, und die Surround-Ansicht der Umgebung des Kraftfahrzeugs anhand der empfangenen Kamerabilder unter Verwendung der Maske des Kraftfahrzeugs zu erzeugen.

Gemäß einem dritten Aspekt betrifft die Erfindung ein Kraftfahrzeug mit einer erfindungsgemäßen Vorrichtung zum Erzeugen einer Surround-Ansicht einer Umgebung des Kraftfahrzeugs.

Die Erfindung ermöglicht es, alle Bereiche der Fahrzeugumgebung, die von den Fahrzeugkameras aus um das Fahrzeug herum sichtbar sind, konsistent darzustellen. Dies wird erreicht, indem eine geometrische Maske des Fahrzeugs konstruiert wird, die die Fahrzeugteile in Multikamera-Visualisierungen abdeckt.

Die Masken können jeweils als polygonale Flächen definiert werden.

Gemäß einer bevorzugten Weiterbildung des Verfahrens zum Erzeugen der Surround-Ansicht der Umgebung des Kraftfahrzeugs umfassen die beweglichen Bauteile mindestens ein auslenkbares Rad des Kraftfahrzeugs, wobei die zweite Maske in Abhängigkeit von einem momentanen Lenkwinkel des Kraftfahrzeugs ermittelt wird. Anhand des momentanen Lenkwinkels kann die momentane Position des Rades ermittelt werden.

Gemäß einer bevorzugten Weiterbildung des Verfahrens zum Erzeugen der Surround-Ansicht der Umgebung des Kraftfahrzeugs wird für das mindestens eine Rad des Kraftfahrzeugs in Abhängigkeit von dem momentanen Lenkwinkel ein virtuelles Rad in einem Fahrzeugkamerakoordinatensystem einer das Rad des Kraftfahrzeugs erfassenden Fahrzeugkamera erzeugt, wobei das virtuelle Rad in dem Fahrzeugkamerakoordinatensystem aus einem Blickwinkel der Fahrzeugkamera auf den Untergrund projiziert wird, um die auf den Untergrund projizierte Silhouette des Rades des Kraftfahrzeugs zu erzeugen. Die Maske für die Fahrzeugräder kann somit auf der Grundlage der Reprojektion eines virtuellen Rades erstellt werden. Dabei kann die momentane Position des Rades berücksichtigt werden.

Gemäß einer bevorzugten Weiterbildung des Verfahrens zum Erzeugen der Surround-Ansicht der Umgebung des Kraftfahrzeugs wird das virtuelle Rad weiter in Abhängigkeit von Abmessungen und einer Position des mindestens einen Rades des Kraftfahrzeugs erzeugt. Die Abmessungen können für das Kraftfahrzeug oder ein Modell des Kraftfahrzeugs spezifiziert werden.

Gemäß einer bevorzugten Weiterbildung des Verfahrens zum Erzeugen der Surround-Ansicht der Umgebung des Kraftfahrzeugs wird das virtuelle Rad durch einen Zylinder modelliert. Der Zylinder kann dabei durch ein Gitternetz beschrieben werden.

In dem Verfahren zum Erzeugen der Surround-Ansicht der Umgebung des Kraftfahrzeugs wird erfindungsgemäß für jede Fahrzeugkamera ein Begrenzungslinienzug ermittelt, welcher eine Begrenzung des Fahrzeugkörpers in dem Kamerabild der Fahrzeugkamera angibt. Jeder Begrenzungslinienzug wird auf den Untergrund projiziert. Schnittpunkte der auf den Untergrund projizierten Begrenzungslinienzüge werden ermittelt, wobei die auf den Untergrund projizierte Silhouette des Fahrzeugkörpers als eine Fläche bestimmt wird, welche von den Abschnitten der Begrenzungslinienzüge eingeschlossen wird, welche sich zwischen den ermittelten Schnittpunkten erstrecken. Dadurch kann sichergestellt werden, dass keine Bildinformationen verwendet werden, welche Teile des Fahrzeugkörpers abbilden.

Gemäß einer bevorzugten Weiterbildung des Verfahrens zum Erzeugen der Surround-Ansicht der Umgebung des Kraftfahrzeugs wird der Begrenzungslinienzug für jedes Kamerabild automatisch ermittelt. Dadurch kann das Verfahren schneller durchgeführt werden. Die automatischen Ermittlung kann dabei modellspezifisch erfolgen, das heißt nicht individuell für jedes Kraftfahrzeug. Weiter kann ein virtuelles dreidimensionales Modell des Kraftfahrzeugs verwendet werden. Auf der Grundlage der realen Kameraextrinsik für jedes Fahrzeug nach der Kalibrierung können die exakten Begrenzungslinienzüge vollständig in der virtuellen Umgebung extrahiert werden. Eine andere Möglichkeit ist es, dieses dreidimensionale Modell des Kraftfahrzeugs zu verwenden, um die Polygonfläche der ersten Maske direkt aus der Projektion des virtuellen Fahrzeugs zu schätzen.

Gemäß einer bevorzugten Weiterbildung des Verfahrens zum Erzeugen der Surround-Ansicht der Umgebung des Kraftfahrzeugs wird der Begrenzungslinienzug für jedes Kamerabild unter Verwendung eines virtuellen Modells des Fahrzeugkörpers erzeugt.

Erfindungsgemäß wird in dem Verfahren zum Erzeugen der Surround-Ansicht der Umgebung des Kraftfahrzeugs für jeden ermittelten Schnittpunkt ein angrenzender Überlappungsbereich von Erfassungsbereichen der Fahrzeugkameras ermittelt. Mindestens einer der Überlappungsbereiche wird horizontal zu einem äußeren Punkt der auf den Untergrund projizierte Silhouette eines beweglichen Bauteils des Kraftfahrzeugs verschoben. Die Projektionsbereiche der Kameras und die überlappenden Bereiche können also angepasst werden, um die unerwünschte Darstellung undurchsichtiger Fahrzeugteile zu vermeiden.

Gemäß einer bevorzugten Weiterbildung des Verfahrens zum Erzeugen der Surround-Ansicht der Umgebung des Kraftfahrzeugs wird anhand der von den Fahrzeugkameras erzeugten Kamerabilder die Surround-Ansicht der Umgebung des Kraftfahrzeugs erzeugt, wobei in durch die Maske des Kraftfahrzeugs maskierte Bereiche keine Kameradaten der Kamerabilder eingefügt werden. Es kann stattdessen ein künstliches Abbild des Kraftfahrzeugs eingefügt werden.

Gemäß einer bevorzugten Weiterbildung des Verfahrens zum Erzeugen der Surround-Ansicht der Umgebung des Kraftfahrzeugs ist die Surround-Ansicht der Umgebung des Kraftfahrzeugs eine Bowlansicht der Umgebung des Kraftfahrzeugs oder eine Draufsicht auf die Umgebung des Kraftfahrzeugs.

Gemäß einer bevorzugten Weiterbildung des Verfahrens zum Erzeugen der Surround-Ansicht der Umgebung des Kraftfahrzeugs wird die erzeugte Surround-Ansicht der Umgebung des Kraftfahrzeugs auf einer Anzeigevorrichtung des Kraftfahrzeugs angezeigt. Die Surround-Ansicht kann etwa bei Verwendung eines Parkassistenten oder bei einer Rückwärtsfahrt angezeigt werden.

Gemäß einer bevorzugten Weiterbildung umfasst das Kraftfahrzeug eine Anzeigevorrichtung, welche dazu ausgebildet ist, die erzeugte Surround-Ansicht der Umgebung des Kraftfahrzeugs anzuzeigen.

Die vorliegende Erfindung wird nachfolgend anhand der in den schematischen Figuren der Zeichnungen angegebenen Ausführungsbeispiele näher erläutert.

Es zeigen:
- Fig. 1: ein schematisches Blockdiagramm eines Kraftfahrzeugs mit einer Vorrichtung zum Erzeugen einer Surround-Ansicht einer Umgebung des Kraftfahrzeugs gemäß einer Ausführungsform der Erfindung;
- Fig. 2: eine schematische Darstellung eines Kamerabildes zur Erläuterung eines Begrenzungslinienzugs;
- Fig. 3: schematische Darstellungen zur Erläuterung der Erzeugung der ersten Maske;
- Fig. 4: schematische Darstellungen von Erfassungsbereichen von Fahrzeugkameras;
- Fig. 5: eine schematische Darstellung von nicht verschobenen Überlappungsbereichen;
- Fig. 6: eine schematische Darstellung von verschobenen Überlappungsbereichen;
- Fig. 7: schematische Darstellungen zur Erläuterung der Erzeugung der Maske des Kraftfahrzeugs;
- Fig. 8: eine schematische Darstellung der Maske des Kraftfahrzeugs; und
- Fig. 9: ein Flussdiagramm eines Verfahrens zum Erzeugen einer Surround-Ansicht einer Umgebung eines Kraftfahrzeugs gemäß einer Ausführungsform der Erfindung.

Sofern sinnvoll lassen sich die beschriebenen Ausgestaltungen und Weiterbildungen beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

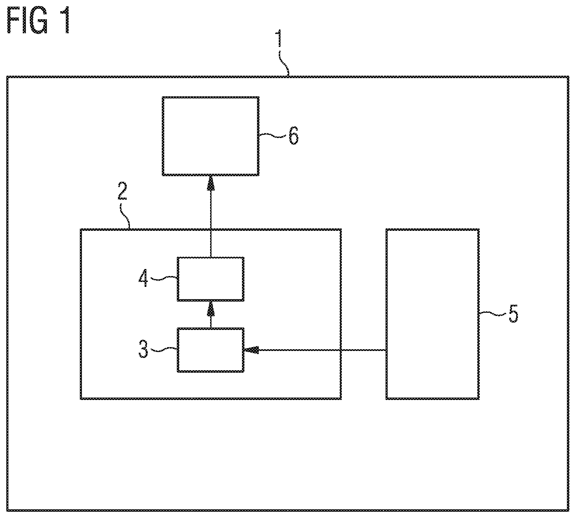

Figur 1 zeigt ein schematisches Blockdiagramm eines Kraftfahrzeugs 1 mit einer Vorrichtung 2 zum Erzeugen einer Surround-Ansicht einer Umgebung des Kraftfahrzeugs 1. Das Kraftfahrzeug 1 umfasst einen Fahrzeugkörper, welcher im Sinne der Erfindung etwa eine Karosserie sowie nicht auslenkbare Räder umfassen kann. Weiter umfasst das Kraftfahrzeug 1 relativ zu dem Fahrzeugkörper bewegliche Bauteile, insbesondere schwenkbare oder auslenkbare Bauteile, welche zu einer Änderung der Silhouette des Kraftfahrzeugs 1 beitragen können (etwa in einer Draufsicht). Die beweglichen Bauteile umfassen bevorzugt die auslenkbaren Räder des Kraftfahrzeugs 1. Weitere bewegliche Bauteile können auslenkbare Komponenten von Baufahrzeugen oder eine Schar eines Schneepflugs umfassen.

Die Vorrichtung 2 umfasst eine drahtlose oder drahtgebundene Schnittstelle 3, welche mit Fahrzeugkameras 5 des Kraftfahrzeugs 1 gekoppelt ist und Kamerabilder von den Fahrzeugkameras 5 empfängt. Beispielsweise können vier, sechs, acht oder zehn Fahrzeugkameras 5 vorgesehen sein. Bei einer Ausführungsform sind jeweils Kameras im Frontbereich, im Heckbereich und an den Seitenspiegeln angeordnet. Die Erfindung ist nicht auf eine bestimmte Anzahl von Fahrzeugkameras 5 beschränkt. Bei den Fahrzeugkameras 5 handelt es sich bevorzugt um Fischaugenkameras mit einem großen Erfassungsbereich von vorzugsweise mindestens 160 Grad.

Die Erfindung ist für beliebige Anwendungsbereiche vorgesehen, bei welchen "blinde" Bereiche (Blindspots) auftreten können. Beispielsweise können auch Trailer-Anwendungen umfasst sein.

Die Vorrichtung 2 hat oder erlangt weiter Kenntnis von intrinsischen und extrinsischen Kameraparametern der Fahrzeugkameras 5.

Im Sinne der Erfindung können intrinsische Kameraparameter intern und fest an eine bestimmte Fahrzeugkamera 5 gekoppelt sein. Intrinsische Kameraparameter ermöglichen demnach eine Zuordnung zwischen Kamerakoordinaten und Pixelkoordinaten.

Extrinsische Parameter können kameraextern sein und sich in Bezug auf das Weltbild ändern, d. h. in Abhängigkeit von Lage, Position und Ausrichtung der Fahrzeugkamera 5 im Weltkoordinatensystem.

Weiter umfasst die Vorrichtung 2 eine Recheneinrichtung 4, welche Mikrocontroller, Mikroprozessoren oder dergleichen aufweisen kann, um Berechnungsoperationen durchzuführen.

Die Recheneinrichtung 4 erzeugt eine Maske des Kraftfahrzeugs 1. Hierzu erzeugt die Recheneinrichtung 4 eine erste Maske, welche eine auf einen Untergrund projizierte Silhouette des Fahrzeugkörpers darstellt. Die erste Maske kann also beispielsweise eine Karosseriemaske darstellen.

Weiter erzeugt die Recheneinrichtung 4 eine zweite Maske, welche eine auf den Untergrund projizierte Silhouette der beweglichen Bauteile des Kraftfahrzeugs in einem momentanen Zustand darstellt. Die zweite Maske umfasst somit beispielsweise die auslenkbaren Räder des Kraftfahrzeugs 1 in einer aktuellen Radstellung. Dabei kann ein virtuelles Radmodell verwendet werden, um unter Berücksichtigung momentaner Lenkwinkelinformationen ein virtuelles Rad im Weltkoordinatensystem derart anzuordnen, dass es der realen Radposition und Radgröße so genau wie möglich entspricht. Das virtuelle Rad kann derart projiziert werden, dass es so positioniert wird, als ob das virtuelle Rad von der entsprechenden Fahrzeugkamera 5 erfasst worden wäre. Dabei werden zum Beispiel linke Räder auf die linke Kamera und rechte Räder auf die rechte Kamera projiziert. Das virtuelle Radmodell wird dann zurück auf den Boden projiziert. Die projizierten virtuellen Radmodelle können an einer bestimmten Fahrzeuglängsposition so beschnitten werden, dass sie einem verwendeten Visualisierungsansatz entsprechen.

Die Recheneinrichtung 4 kombiniert die erste Maske mit der zweiten Maske, um die Maske des Kraftfahrzeugs zu erzeugen. Die Maske des Kraftfahrzeugs kann dabei alle Bereich umfassen, welche entweder von der ersten Maske oder von der zweiten Maske umfasst sind.

Weiter erzeugt die Recheneinrichtung 4 eine Surround-Ansicht der Umgebung des Kraftfahrzeugs 1 anhand der empfangenen Kamerabilder, unter Berücksichtigung von extrinsischen und intrinsischen Kameraparametern der entsprechenden Fahrzeugkameras 5. Dabei werden anhand der Kamerabilder erzeugte Bildinformationen lediglich auf Bereiche projiziert, welche außerhalb der Maske des Kraftfahrzeugs 1 liegen.

Die Surround-Ansicht kann über eine Anzeigevorrichtung 6 ausgegeben werden, etwa ein Fahrzeugdisplay.

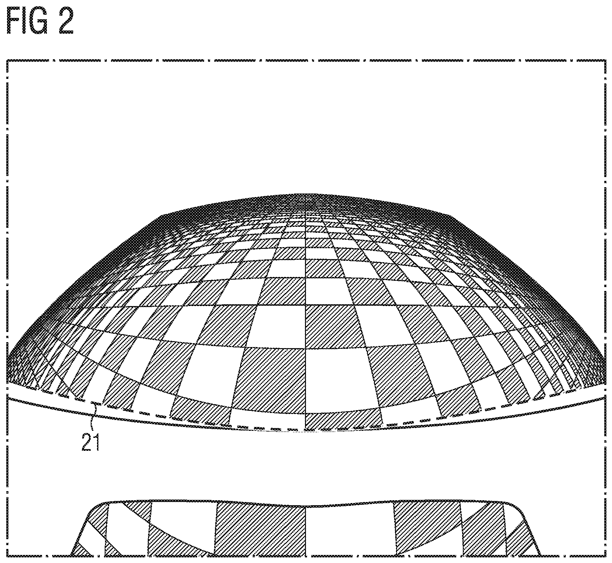

Figur 2 zeigt eine schematische Darstellung eines Kamerabildes zur Erläuterung eines Begrenzungslinienzugs 21, welcher herangezogen wird, um die erste Maske (Karosseriemaske) zu erzeugen. Der Begrenzungslinienzug 21 entspricht dabei hier in einem Kamerabild (etwa einem Kamerabild einer Frontkamera) der Grenze zwischen einem Bereich, welcher dem Fahrzeugkörper zugeordnet wird, und einem außerhalb liegenden Bereich, etwa einem Untergrund.

Die Begrenzungslinienzüge 21 werden für jede Fahrzeugkamera 5 erzeugt. Das Erzeugen kann automatisch oder manuell erfolgen. Die Begrenzungslinienzüge 21 können für jedes Kraftfahrzeug 1 individuell ermittelt werden. Alternativ können die Begrenzungslinienzüge 21 nur einmal für ein bestimmtes Fahrzeugmodell extrahiert werden und die projizierte Geometrie kann für alle Kraftfahrzeuge 1 desselben Modells verwendet werden. Dabei kann ein kleiner Versatz berücksichtigt werden, um die erste Maske zu vergrößern und mögliche Abweichungen zu berücksichtigen.

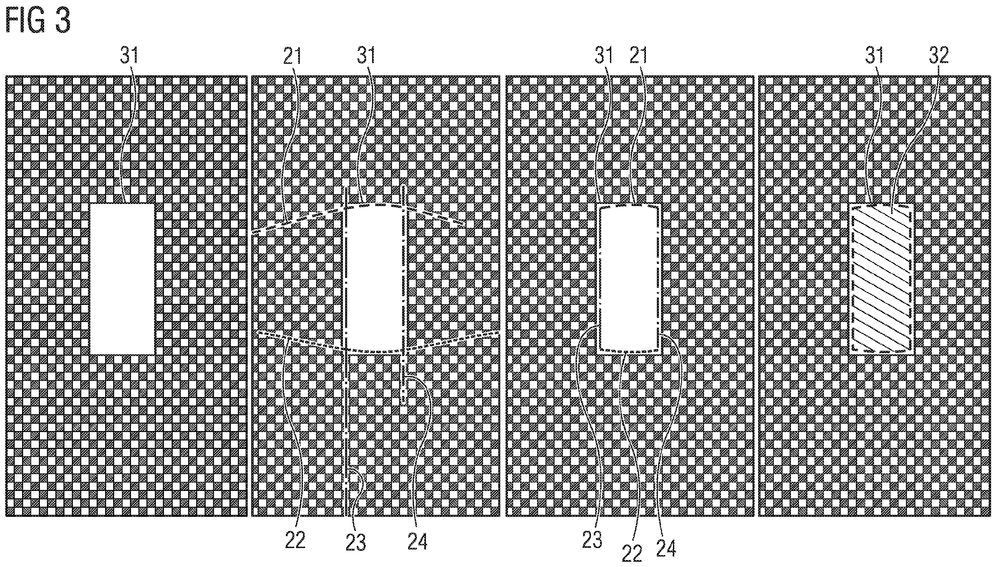

Figur 3 zeigt schematische Darstellungen zur Erläuterung der Erzeugung der ersten Maske. Dabei ist eine Draufsicht auf das Kraftfahrzeug 1 illustriert. In weiteren Ausführungsformen können auch Bowlansichten verwendet werden. In einem einfachsten Fall (Figur 3, ganz links) wird der Fahrzeugkörper durch ein Rechteck 31 modelliert. Um ein genaueres Modell des Fahrzeugkörpers zu erhalten, werden die Begrenzungslinienzüge 21 bis 24 für jede von insgesamt vier Fahrzeugkameras des Kraftfahrzeugs 1 ermittelt und auf den Untergrund projiziert (Figur 3, Mitte links). Weiter werden Schnittpunkte der auf den Untergrund projizierten Begrenzungslinienzüge 21 bis 24 ermittelt und die Begrenzungslinienzüge 21 bis 24 werden auf polygonale Abschnitte der Begrenzungslinienzüge 21 bis 24 beschränkt, welche sich zwischen den ermittelten Schnittpunkten erstrecken (Figur 3, Mitte rechts). Die auf den Untergrund projizierte Silhouette des Fahrzeugkörpers, welche die erste Maske 32 darstellt, wird als eine Fläche bestimmt, welche von diesen Abschnitten der Begrenzungslinienzüge 21 bis 24 eingeschlossen wird (Figur 3, ganz rechts).

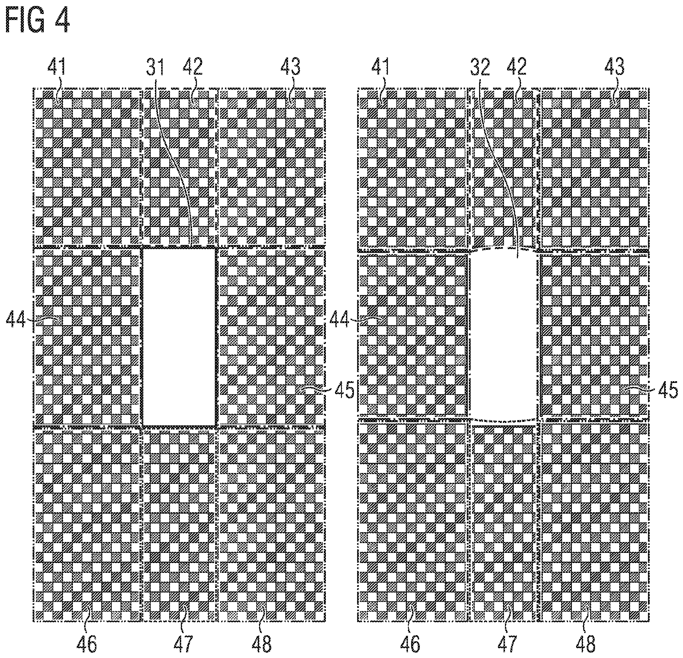

Figur 4 zeigt schematische Darstellungen von Erfassungsbereichen 41 bis 48 von vier Fahrzeugkameras 5 des Kraftfahrzeugs 1. Diese Erfassungsbereiche 41 bis 48 werden zunächst relativ zu dem das Kraftfahrzeug 1 modellierenden Rechteck 31 definiert. Dabei gibt es vier erste Bereiche 42, 44, 45, 47, welche jeweils nur von einer der Fahrzeugkameras erfasst werden. Weiter gibt es vier zweite Bereiche 41, 43, 46, 48, welche Überlappungsbereiche sind, die von zwei der Fahrzeugkameras 5 erfasst werden (Figur 4 links). Unter Verwendung der ersten Maske 32 verschieben sich die Erfassungsbereiche 41 bis 48. Die Überlappungsbereiche 41, 43, 46, 48 haben weiterhin eine rechteckige Form, während die ersten Bereiche 42, 44, 45, 47 eine durch die erste Maske 32 begrenzte Seite aufweisen, welche nicht geradlinig verlaufen muss.

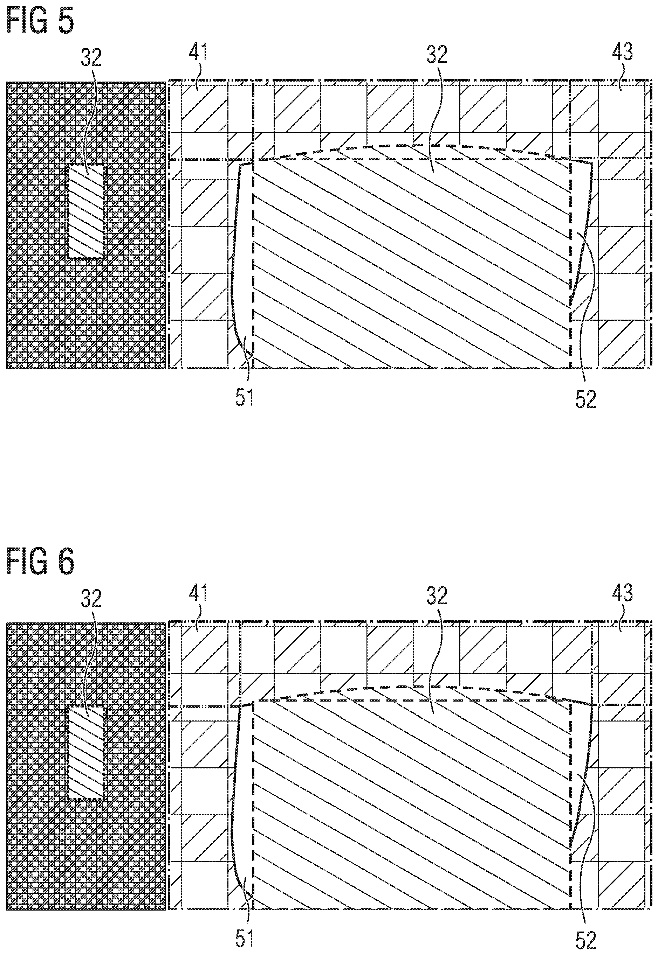

Figur 5 zeigt eine schematische Darstellung von nicht verschobenen Überlappungsbereichen 41, 43. Sofern nun zusätzlich Räder 51, 52 des Kraftfahrzeugs 1 berücksichtigt werden sollen, können diese Räder 51, 52 in die nicht verschobenen Überlappungsbereiche 41, 43 hineinragen. Dazu wird zunächst ermittelt, inwieweit die Räder 51, 52 die zuvor durch die Begrenzungslinienzüge 21 bis 24 definierte erste Maske 32 überschreiten. Dies erfolgt mithilfe eines virtuellen Rades, welches auf den Radabmessungen, der Position und dem momentanen Lenkwinkel basierend erzeugt wird. Das virtuelle Rad kann in einem Zylindernetzmodell dargestellt werden.

Das virtuelle Rad wird in den Fahrzeugkamerakoordinatensystemen dargestellt, als ob es von der Fahrzeugkamera 5 aufgenommen worden wäre. Die virtuellen Räder werden anschließend auf den Boden projiziert.

Figur 6 zeigt eine schematische Darstellung von verschobenen Überlappungsbereichen 41, 43. Dabei wird für jeden Schnittpunkt der Begrenzungslinienzüge 21 bis 24 der angrenzende Überlappungsbereich 41, 43 der Erfassungsbereichen der Fahrzeugkameras horizontal zu einem äußeren Punkt der auf den Untergrund projizierte Silhouette des entsprechenden Rades 51, 52 verschoben. Die Überlappungsbereiche 41, 43 werden somit dynamisch behandelt. Die rechteckigen Überlappungsbereiche 41, 43 entstehen dabei bei Verwendung von Fahrzeugkameras mit großem Erfassungsbereich (Fischaugenkameras), d.h. bis zu 180 Grad. Durch Verschieben der Überlappungsbereiche 41, 43 wird verhindert, dass Teile der beweglichen und ausgelenkten Räder von den seitlichen Fahrzeugkameras erfasst werden.

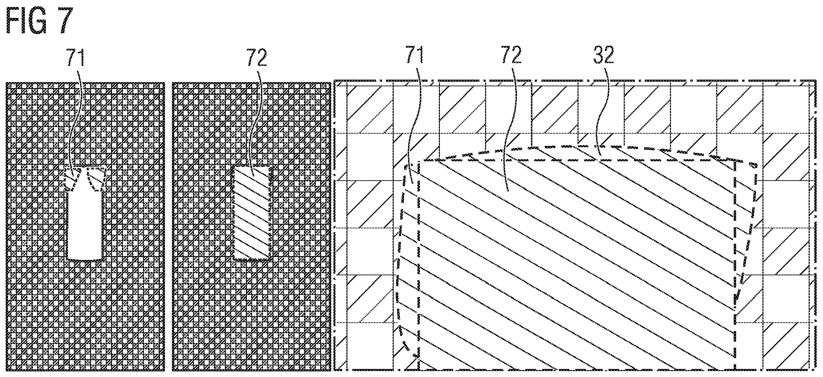

Figur 7 zeigt schematische Darstellungen zur Erläuterung der Erzeugung der Maske 72 des Kraftfahrzeugs 1. Dazu wird die erste Maske 32 mit einer zweiten Maske 71 der auslenkbaren Räder des Kraftfahrzeugs kombiniert, um die Maske 72 des Kraftfahrzeugs 1 zu erzeugen.

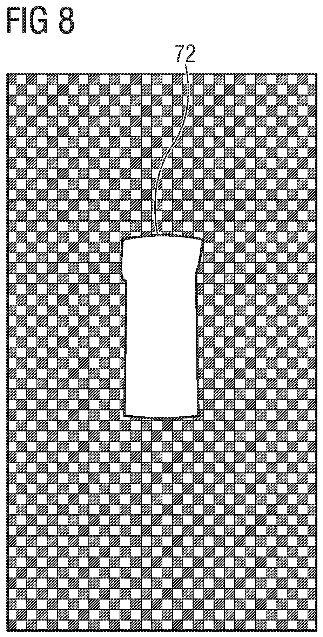

Figur 8 zeigt eine schematische Darstellung der Maske 72 des Kraftfahrzeugs 1. Zum Erzeugen der Surround-Ansicht der Umgebung des Kraftfahrzeugs 1 werden die Kamerabilder der Fahrzeugkameras 5 in den Bereich projiziert, welcher nicht von der Maske 72 des Kraftfahrzeugs 1 maskiert wird.

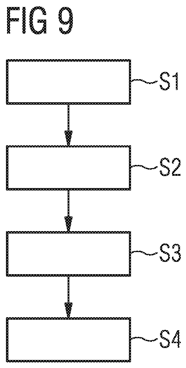

Figur 9 zeigt ein Flussdiagramm eines Verfahrens zum Erzeugen einer Surround-Ansicht einer Umgebung eines Kraftfahrzeugs 1 gemäß einer Ausführungsform der Erfindung.

In einem ersten Schritt S1 wird eine erste Maske 32 erzeugt, welche eine auf einen Untergrund projizierte Silhouette des Fahrzeugkörpers darstellt. Weiter wird in einem zweiten Schritt S2 eine zweite Maske erzeugt, welche eine auf den Untergrund projizierte Silhouette der beweglichen Bauteile des Kraftfahrzeugs in einem momentanen Zustand darstellt.

Weiter umfasst das Verfahren das Erzeugen einer Maske des Kraftfahrzeugs 1 durch Vereinigung der ersten Maske mit der zweiten Maske, S3. Schließlich wird eine Surround-Ansicht der Umgebung des Kraftfahrzeugs 1 anhand von Kamerabildern von Fahrzeugkameras 5 des Kraftfahrzeugs 1 unter Verwendung der Maske des Kraftfahrzeugs 1 erzeugt, S4, welche über eine Anzeigevorrichtung 6 des Kraftfahrzeugs 1 ausgegeben werden kann.

### Bezugszeichenliste

- 1: Kraftfahrzeug
- 2: Vorrichtung zum Erzeugen einer Surround-Ansicht
- 3: Schnittstelle
- 4: Recheneinrichtung
- 5: Fahrzeugkameras
- 6: Anzeigevorrichtung
- 21-24: Begrenzungslinienzüge
- 31: Rechteck
- 32: erste Maske
- 41-48: Erfassungsbereiche
- 51, 52: Räder
- 71: zweite Maske
- 72: Maske des Kraftfahrzeugs
- S1-S4: Verfahrensschritte

## Patentansprüche

1. Verfahren zum Erzeugen einer Surround-Ansicht einer Umgebung eines Kraftfahrzeugs (1) durch eine Recheneinrichtung (4), wobei das Kraftfahrzeug (1) einen Fahrzeugkörper und relativ zu dem Fahrzeugkörper bewegliche Bauteile aufweist, mit den Schritten:
- Erzeugen (S1) einer ersten Maske (32), welche eine auf einen Untergrund projizierte Silhouette des Fahrzeugkörpers darstellt;
- Erzeugen (S2) einer zweiten Maske (71), welche eine auf den Untergrund projizierte Silhouette der beweglichen Bauteile des Kraftfahrzeugs (1) in einem momentanen Zustand darstellt;
- Erzeugen (S3) einer Maske (72) des Kraftfahrzeugs (1) durch Vereinigung der ersten Maske (32) mit der zweiten Maske (71); und
- Erzeugen (S4) der Surround-Ansicht der Umgebung des Kraftfahrzeugs (1) anhand von Kamerabildern von Fahrzeugkameras (6) des Kraftfahrzeugs (1) unter Verwendung der Maske (72) des Kraftfahrzeugs (1),
**dadurch gekennzeichnet, dass** für jede Fahrzeugkamera (6) ein Begrenzungslinienzug (21) ermittelt wird, welcher eine Begrenzung des Fahrzeugkörpers in dem Kamerabild der Fahrzeugkamera (6) angibt, wobei jeder Begrenzungslinienzug (21) auf den Untergrund projiziert wird, wobei Schnittpunkte der auf den Untergrund projizierten Begrenzungslinienzüge ermittelt werden, und wobei die auf den Untergrund projizierte Silhouette des Fahrzeugkörpers als eine Fläche bestimmt wird, welche von den Abschnitten der Begrenzungslinienzüge eingeschlossen wird, welche sich zwischen den ermittelten Schnittpunkten erstrecken, wobei für jeden ermittelten Schnittpunkt ein angrenzender Überlappungsbereich von Erfassungsbereichen der Fahrzeugkameras (6) ermittelt wird, und mindestens einer der Überlappungsbereiche horizontal zu einem äußeren Punkt der auf den Untergrund projizierte Silhouette eines beweglichen Bauteils des Kraftfahrzeugs (1) verschoben wird.

2. Verfahren nach Anspruch 1, wobei die beweglichen Bauteile mindestens ein auslenkbares Rad des Kraftfahrzeugs (1) umfassen, und wobei die zweite Maske (71) in Abhängigkeit von einem momentanen Lenkwinkel des Kraftfahrzeugs (1) ermittelt wird.

3. Verfahren nach Anspruch 2, wobei für das mindestens eine Rad des Kraftfahrzeugs (1) in Abhängigkeit von dem momentanen Lenkwinkel ein virtuelles Rad in einem Fahrzeugkamerakoordinatensystem einer das Rad des Kraftfahrzeugs (1) erfassenden Fahrzeugkamera (6) erzeugt wird, und wobei das virtuelle Rad in dem Fahrzeugkamerakoordinatensystem aus einem Blickwinkel der Fahrzeugkamera (6) auf den Untergrund projiziert wird, um die auf den Untergrund projizierte Silhouette des Rades des Kraftfahrzeugs (1) zu erzeugen.

4. Verfahren nach Anspruch 3, wobei das virtuelle Rad weiter in Abhängigkeit von Abmessungen und einer Position des mindestens einen Rades des Kraftfahrzeugs (1) erzeugt wird.

5. Verfahren nach Anspruch 3 oder 4, wobei das virtuelle Rad durch einen Zylinder modelliert wird.

6. Verfahren nach einem der vorangehenden Ansprüche, wobei der Begrenzungslinienzug (21) für jedes Kamerabild automatisch ermittelt wird.

7. Verfahren nach einem der vorangehenden Ansprüche, wobei der Begrenzungslinienzug (21) für jedes Kamerabild unter Verwendung eines virtuellen Modells des Fahrzeugkörpers erzeugt wird.

8. Verfahren nach einem der vorangehenden Ansprüche, wobei anhand der von den Fahrzeugkameras (6) erzeugten Kamerabilder die Surround-Ansicht der Umgebung des Kraftfahrzeugs (1) erzeugt wird, wobei in durch die Maske (72) des Kraftfahrzeugs (1) maskierte Bereiche keine Kameradaten der Kamerabilder eingefügt werden.

9. Verfahren nach einem der vorangehenden Ansprüche, wobei die Surround-Ansicht der Umgebung des Kraftfahrzeugs (1) eine Bowlansicht der Umgebung des Kraftfahrzeugs (1) oder eine Draufsicht auf die Umgebung des Kraftfahrzeugs (1) ist.

10. Verfahren nach einem der vorangehenden Ansprüche, wobei die erzeugte Surround-Ansicht der Umgebung des Kraftfahrzeugs (1) auf einer Anzeigevorrichtung (2) des Kraftfahrzeugs (1) angezeigt wird.

11. Vorrichtung (2) zum Erzeugen einer Surround-Ansicht einer Umgebung eines Kraftfahrzeugs (1), wobei das Kraftfahrzeug (1) einen Fahrzeugkörper und relativ zu dem Fahrzeugkörper bewegliche Bauteile aufweist, mit:
einer Schnittstelle (3) welche dazu ausgebildet ist, Kamerabilder von Fahrzeugkameras (6) des Kraftfahrzeugs (1) zu empfangen; und
einer Recheneinrichtung (4), welche dazu ausgebildet ist:
eine erste Maske (32) zu erzeugen, welche eine auf einen Untergrund projizierte Silhouette des Fahrzeugkörpers darstellt;
eine zweite Maske (71) zu erzeugen, welche eine auf den Untergrund projizierte Silhouette der beweglichen Bauteile des Kraftfahrzeugs (1) in einem momentanen Zustand darstellt;
eine Maske (72) des Kraftfahrzeugs (1) durch Vereinigung der ersten Maske (32) mit der zweiten Maske zu erzeugen; und
die Surround-Ansicht der Umgebung des Kraftfahrzeugs (1) anhand der empfangenen Kamerabilder unter Verwendung der Maske (72) des Kraftfahrzeugs (1) zu erzeugen,
**dadurch gekennzeichnet, dass** die Recheneinrichtung (4) ferner dazu eingerichtet ist für jede Fahrzeugkamera (6) einen Begrenzungslinienzug (21) zu ermitteln, welcher eine Begrenzung des Fahrzeugkörpers in dem Kamerabild der Fahrzeugkamera (6) angibt, und jeden Begrenzungslinienzug (21) auf den Untergrund zu projizieren, wobei Schnittpunkte der auf den Untergrund projizierten Begrenzungslinienzüge ermittelt werden, und die auf den Untergrund projizierte Silhouette des Fahrzeugkörpers als eine Fläche zu bestimmen, welche von den Abschnitten der Begrenzungslinienzüge, welche sich zwischen den ermittelten Schnittpunkten erstrecken, eingeschlossen wird, wobei die Recheneinrichtung (4) weiterhin dazu eingerichtet ist, für jeden ermittelten Schnittpunkt einen angrenzenden Überlappungsbereich von Erfassungsbereichen der Fahrzeugkameras (6) zu ermitteln und mindestens einen der Überlappungsbereiche horizontal zu einem äußeren Punkt der auf den Untergrund projizierten Silhouette eines beweglichen Bauteils des Kraftfahrzeugs (1) zu verschieben.

12. Kraftfahrzeug (1) mit einer Vorrichtung (2) nach Anspruch 11 zum Erzeugen einer Surround-Ansicht einer Umgebung des Kraftfahrzeugs (1).

13. Kraftfahrzeug (1) nach Anspruch 12, mit einer Anzeigevorrichtung (6), welche dazu ausgebildet ist, die erzeugte Surround-Ansicht der Umgebung des Kraftfahrzeugs (1) anzuzeigen.

## Claims

1. A method for generating a surround view of surroundings of a motor vehicle (1) by computing means (4), wherein the motor vehicle (1) has a vehicle body and components movable relative to the vehicle body, comprising the steps of:
- generating (S1) a first mask (32) which represents a silhouette of the vehicle body projected onto an underlying surface;
- generating (S2) a second mask (71) which represents a silhouette of the moving components of the motor vehicle (1) projected onto the underlying surface in a current state;
- generating (S3) a mask (72) of the motor vehicle (1) by combining the first mask (32) with the second mask (71); and
- generating (S4) the surround view of the surroundings of the motor vehicle (1) based on camera images from vehicle cameras (6) of the motor vehicle (1) using the mask (72) of the motor vehicle (1),
**characterised in that**, for each vehicle camera (6), a boundary polygonal chain (21) is determined which indicates a boundary of the vehicle body in the camera image from the vehicle camera (6), wherein each boundary polygonal chain (21) is projected onto the underlying surface, wherein points of intersection of the boundary polygonal chains projected onto the underlying surface are determined, and wherein the silhouette of the vehicle body projected onto the underlying surface is determined as an area enclosed by the sections of the boundary polygonal chains extending between the determined points of intersection, wherein, for each determined point of intersection, an adjacent overlapping region of capturing regions of the vehicle cameras (6) is determined, and at least one of the overlapping regions is shifted horizontally to an external point of the silhouette of a movable component of the motor vehicle (1) projected onto the underlying surface.

2. The method according to claim 1, wherein the movable components comprise at least one deflectable wheel of the motor vehicle (1), and wherein the second mask (71) is determined as a function of a current steering angle of the motor vehicle (1).

3. The method according to claim 2, wherein, for the at least one wheel of the motor vehicle (1), a virtual wheel is generated in a vehicle camera coordinate system of a vehicle camera (6) capturing the wheel of the motor vehicle (1) as a function of the current steering angle, and wherein the virtual wheel is projected onto the underlying surface in the vehicle camera coordinate system from a viewpoint of the vehicle camera (6) to generate the silhouette of the wheel of the motor vehicle (1) projected onto the underlying surface.

4. The method according to claim 3, wherein the virtual wheel is further generated as a function of dimensions and a position of the at least one wheel of the motor vehicle (1).

5. The method according to claim 3 or 4, wherein the virtual wheel is modelled by a cylinder.

6. The method according to any one of the preceding claims, wherein the boundary polygonal chain (21) is automatically determined for each camera image.

7. The method according to any one of the preceding claims, wherein the boundary polygonal chain (21) is generated for each camera image using a virtual model of the vehicle body.

8. The method according to any one of the preceding claims, wherein the surround view of the surroundings of the motor vehicle (1) is generated based on the camera images generated by the vehicle cameras (6), wherein camera data of the camera images are not inserted into areas masked by the mask (72) of the motor vehicle (1).

9. The method according to any one of the preceding claims, wherein the surround view of the surroundings of the motor vehicle (1) is a bowl view of the surroundings of the motor vehicle (1) or a top view of the surroundings of the motor vehicle (1).

10. The method according to any one of the preceding claims, wherein the generated surround view of the surroundings of the motor vehicle (1) is displayed on a display device (2) of the motor vehicle (1).

11. A device (2) for generating a surround view of surroundings of a motor vehicle (1), wherein the motor vehicle (1) has a vehicle body and components movable relative to the vehicle body, comprising:
an interface (3) configured to receive camera images from vehicle cameras (6) of the motor vehicle (1); and
computing means (4) configured to:
generate a first mask (32) which represents a silhouette of the vehicle body projected onto an underlying surface;
generate a second mask (71) which represents a silhouette of the moving components of the motor vehicle (1) projected onto the underlying surface in a current state;
generate a mask (72) of the motor vehicle (1) by combining the first mask (32) with the second mask; and
generate the surround view of the surroundings of the motor vehicle (1) based on the received camera images using the mask (72) of the motor vehicle (1),
**characterised in that** the computing means (4) is further configured to determine, for each vehicle camera (6), a boundary polygonal chain (21) which indicates a boundary of the vehicle body in the camera image from the vehicle camera (6), and to project each boundary polygonal chain (21) onto the underlying surface, wherein points of intersection of the boundary polygonal chains projected onto the underlying surface are determined, and to determine the silhouette of the vehicle body projected onto the underlying surface as an area enclosed by the sections of the boundary polygonal chains extending between the determined points of intersection, wherein the computing means (4) is further adapted to determine, for each determined point of intersection, an adjacent overlapping region of capturing regions of the vehicle cameras (6), and to shift at least one of the overlapping regions horizontally to an external point of the silhouette of a movable component of the motor vehicle (1) projected onto the underlying surface.

12. A motor vehicle (1) comprising a device (2) according to claim 11 for generating a surround view of the surroundings of the motor vehicle (1).

13. The motor vehicle (1) according to claim 12, comprising a display device (6) configured to display the generated surround view of the surroundings of the motor vehicle (1).

## Revendications

1. Procédé de génération d'une vue panoramique d'un environnement d'un véhicule automobile (1) par un dispositif de calcul (4), dans lequel le véhicule automobile (1) présente une carrosserie du véhicule et des composants mobiles par rapport à la carrosserie du véhicule, comportant les étapes :
- de génération (S1) d'un premier masque (32), lequel représente une silhouette de la carrosserie de véhicule projetée sur un sol ;
- de génération (S2) d'un second masque (71), lequel représente une silhouette des composants mobiles du véhicule automobile (1), projetée sur le sol dans un état instantané ;
- de génération (S3) d'un masque (72) du véhicule automobile (1) par réunion du premier masque (32) avec le second masque (71) ; et
- de génération (S4) de la vue panoramique de l'environnement du véhicule automobile (1) à partir d'images de caméra provenant de caméras de véhicule (6) du véhicule automobile (1) avec utilisation du masque (72) du véhicule automobile (1),
**caractérisé en ce que**, pour chaque caméra de véhicule (6), une ligne de contour (21) est déterminée, laquelle indique une limite de la carrosserie de véhicule dans l'image de caméra de la caméra de véhicule (6), dans lequel chaque ligne de contour (21) est projetée sur le sol, dans lequel des points d'intersection des lignes de contour projetées sur le sol sont déterminés, et dans lequel la silhouette de la carrosserie du véhicule projetée sur le sol est déterminée comme une surface délimitée par les portions des lignes de contour qui s'étendent entre les points d'intersection déterminés, dans lequel un domaine de recouvrement adjacent de champs de détection des caméras de véhicule (6) est déterminé pour chaque point d'intersection déterminé, et au moins l'un des domaines de recouvrement est déplacé horizontalement vers un point extérieur de la silhouette projetée sur le sol d'un composant mobile du véhicule automobile (1).

2. Procédé selon la revendication 1, dans lequel les composants mobiles comprennent au moins une roue orientable du véhicule automobile (1), et dans lequel le second masque (71) est déterminé en fonction d'un angle de braquage instantané du véhicule automobile (1).

3. Procédé selon la revendication 2, dans lequel, pour l'au moins une roue du véhicule automobile (1), une roue virtuelle est générée dans un système de coordonnées de caméra de véhicule d'une caméra de véhicule (6) captant la roue du véhicule automobile (1), en fonction de l'angle de braquage instantané, et dans lequel la roue virtuelle est projetée dans le système de coordonnées de caméra de véhicule sur le sol selon un angle de vue de la caméra de véhicule (6) afin de générer la silhouette de la roue du véhicule automobile (1) projetée sur le sol.

4. Procédé selon la revendication 3, dans lequel la roue virtuelle est en outre générée en fonction des dimensions et d'une position de l'au moins une roue du véhicule automobile (1).

5. Procédé selon la revendication 3 ou 4, dans lequel la roue virtuelle est modélisée par un cylindre.

6. Procédé selon l'une quelconque des revendications précédentes, dans lequel la ligne de contour (21) est déterminée automatiquement pour chaque image de caméra.

7. Procédé selon l'une quelconque des revendications précédentes, dans lequel la ligne de contour (21) est générée pour chaque image de caméra au moyen d'un modèle virtuel de la carrosserie du véhicule.

8. Procédé selon l'une quelconque des revendications précédentes, dans lequel la vue panoramique de l'environnement du véhicule automobile (1) est générée à partir des images de caméra produites par les caméras de véhicule (6), dans lequel aucune donnée d'image des images de caméra n'est insérée dans les zones masquées par le masque (72) du véhicule automobile (1).

9. Procédé selon l'une quelconque des revendications précédentes, dans lequel la vue panoramique de l'environnement du véhicule automobile (1) est une vue en cuvette de l'environnement du véhicule automobile (1) ou une vue de dessus de l'environnement du véhicule automobile (1).

10. Procédé selon l'une quelconque des revendications précédentes, dans lequel la vue panoramique générée de l'environnement du véhicule automobile (1) est affichée sur un dispositif d'affichage (2) du véhicule automobile (1).

11. Dispositif (2) de génération d'une vue panoramique d'un environnement d'un véhicule automobile (1), dans lequel le véhicule automobile (1) présente une carrosserie du véhicule et des composants mobiles par rapport à la carrosserie du véhicule, comportant :
une interface (3) configurée pour recevoir des images de caméra provenant de caméras de véhicule (6) du véhicule automobile (1) ; et
un dispositif de calcul (4) configuré pour :
générer un premier masque (32), lequel représente une silhouette de la carrosserie du véhicule projetée sur un sol ;
générer un second masque (71), lequel représente une silhouette des composants mobiles du véhicule automobile (1) projetée sur le sol dans un état instantané ;
générer un masque (72) du véhicule automobile (1) par réunion du premier masque (32) avec le second masque ; et
générer la vue panoramique de l'environnement du véhicule automobile (1) à partir des images de caméra reçues avec utilisation du masque (72) du véhicule automobile (1),
**caractérisé en ce que** le dispositif de calcul (4) est en outre configuré pour déterminer, pour chaque caméra de véhicule (6), une ligne de contour (21), laquelle indique une limite de la carrosserie du véhicule dans l'image de caméra de la caméra de véhicule (6), et pour projeter chaque ligne de contour (21) sur le sol, dans lequel des points d'intersection des lignes de contour projetées sur le sol sont déterminés, et pour déterminer la silhouette de la carrosserie de véhicule projetée sur le sol comme une surface délimitée par les portions des lignes de contour qui s'étendent entre les points d'intersection déterminés, dans lequel le dispositif de calcul (4) est en outre configuré pour déterminer, pour chaque point d'intersection déterminé, un domaine de recouvrement adjacent de champs de détection des caméras de véhicule (6) et pour déplacer horizontalement au moins l'un des domaines de recouvrement vers un point extérieur de la silhouette projetée sur le sol d'un composant mobile du véhicule automobile (1).

12. Véhicule automobile (1) comportant un dispositif (2) selon la revendication 11 destiné à générer une vue panoramique d'un environnement du véhicule automobile (1).

13. Véhicule automobile (1) selon la revendication 12, comprenant un dispositif d'affichage (6) configuré pour afficher la vue panoramique générée de l'environnement du véhicule automobile (1).
